# EUROPÄISCHE PATENTSCHRIFT

(11) **EP 2 317 285 B1**
(45) Veröffentlichungstag und Bekanntmachung des Hinweises auf die Patenterteilung: **10.12.2014**
(21) Anmeldenummer: 09013183.0
(22) Anmeldetag: 20.10.2009
(51) Int. Cl.: G01D 5/14

(54) **Sensoreinrichtung**
Sensor device
Dispositif de détection

(43) Veröffentlichungstag der Anmeldung: 04.05.2011
(73) Patentinhaber: Scheidt & Bachmann GmbH, D-41238 Mönchengladbach (DE)
(72) Erfinder: Miller, Norbert Dr., 41063 Mönchengladbach (DE); Höffges, Peter, 41179 Mönchengladbach (DE)
(74) Vertreter: Stenger, Watzke & Ring

(56) Entgegenhaltungen:
- EP-A1- 1 826 533
- US-A1- 2009 151 463

## Beschreibung

Die vorliegende Erfindung betrifft eine Sensoreinrichtung zur Bestimmung einer Position eines gegenüber einem ersten Bauteil relativ bewegbaren zweiten Bauteils, insbesondere eine Sensoreinrichtung für die Ermittlung einer Position eines Kolbens gegenüber einem Zylinder einer Kolben-Zylinder-Einheit (siehe z.B. EP 1 826 533 A1). Darüber hinaus betrifft die Erfindung eine Schranke mit einem an einem Pfosten bewegbar gelagerten Baum, welcher Baum mittels einer Kolben-Zylinder-Einheit bewegbar ist.

Gattungsgemäße Sensoreinrichtungen werden in vielfältiger Weise eingesetzt, um bestimmte Vorzugspositionen, beispielsweise Endstellungen oder dergleichen zu erfassen und gegebenenfalls eine entsprechende Steuerung auszulösen. Insbesondere werden derartige Sensoreinrichtungen zum Beispiel bei Zugangsberechtigungssystemen eingesetzt, wie sie auf Parkplätzen, Parkhäusern oder dergleichen zum Einsatz kommen. Aber auch geschützte Bereiche, in denen der Zutritt nur bestimmtem, autorisiertem Personal gestattet ist, finden derartige Zugangsberechtigungssysteme Verwendung. Oft bestehen sie aus einer Schranke, die einen Durchgang, eine Durchfahrt oder dergleichen hinsichtlich des Passierens freigeben oder sperren kann. Hierzu weist die Schranke einen Baum auf, der schwenk- oder drehbar an einem Pfosten gelagert ist und von einem freigebenden in einen sperrenden Zustand sowie umgekehrt überführt werden kann. Hierzu wird der Baum beispielsweise mittels der Kolben-Zylinder-Einheit angetrieben.

In der Regel weist ein Zugangsberechtigungssystem, mit welchem eine Zugangskontrolle durchführbar ist, eine Steuereinheit, eine Einrichtung zur Überprüfung einer Berechtigung sowie eine Vorrichtung auf, die den Zugang bei positiv festgestellter Berechtigung freigibt. Bei einem Parkhaus kann die Vorrichtung beispielsweise aus einer Säule gebildet sein, an der der Baum schwenkbar derart angeordnet ist, dass dieser in einer senkrechten Schwenkstellung die Zufahrt gewährt, während in einer waagerechten Schwenkstellung die Zufahrt behindert ist.

Bei derartigen Systemen ist es vorgesehen, dass ein Nutzer, der Zugang zu einem kostenpflichtigen Parkgelände wünscht, mit seinem Fahrzeug an eine Säule im Eingangsbereich des Parkgeländes neben der Fahrbahn fährt. Dort entnimmt er einen Parkausweis, woraufhin die Steuerung die Parkausweisentnahme detektiert und eine in der Säule angeordnete Vorrichtung mit einem schwenkbar gelagerten Baum derart ansteuert, dass der Baum in die geöffnete Position verschwenkt wird. Die Zufahrt zum Parkgelände ist nunmehr freigegeben und der Nutzer kann mit seinem Fahrzeug in den Parkbereich einfahren. Eine im Bodenbereich angeordnete Induktionsschleife detektiert das Passieren des Schrankenbereiches durch das Fahrzeug. Sobald das Fahrzeug die Induktionsschleife passiert hat, wird mittels eines Steuerbefehls der Baum in die blockierende Position verfahren.

Beim Verlassen des Parkhauses zahlt der Nutzer zunächst an einem Kassenautomaten die entsprechend seiner Nutzung erforderliche Gebühr, was automatisch auf dem Parkausweis vermerkt wird.

Am Ausgang des Parkhauses ist wiederum eine Schranke mit einem schwenkbaren Baum an einem Pfosten vorgesehen. Der Nutzer fährt mit seinem Fahrzeug an die Schranke und führt dort in einem dafür vorgesehenen Schlitz seinen Parkausweis ein, woraufhin dieser geprüft wird und eine zentrale Steuerung bei positivem Prüfergebnis die Schranke in der Weise ansteuert, dass sie in die freigebende Stellung verfahren wird. Der Nutzer kann nun mit seinem Fahrzeug die Schranke passieren und das Parkgelände verlassen. Nach Passieren der Schranke, welches wie im vorhergehenden Fall mittels einer Induktionsschleife überwacht werden kann, wird die Schranke anschließend wieder in den sperrenden Zustand verfahren.

Bei dem Betrieb derartiger Schranken hat sich der Antrieb des Baums mittels einer hydraulisch angetriebenen Kolben-Zylinder-Anordnung bewährt. Als nachteilig erweist es sich jedoch, dass der aktuelle Zustand der Schranke, insbesondere die aktuelle Schwenkposition des Baums oft nicht ermittelt werden kann. Zwar ist es bekannt, Endschalter vorzusehen, mit denen das Erreichen der jeweiligen Endposition des Baums werden kann, jedoch ist es von Nachteil, wenn der Baum nicht die genau vorgegebene Position aufgrund von Materialverschleißes oder dergleichen einnimmt und der Endschalter dementsprechend ein fehlerhaftes Signal liefert. Dies führt zu unnötigem Wartungsaufwand, da die Endschalter entsprechend nachgestellt werden müssen. Andererseits wäre es von Vorteil, wenn die Schwenkposition des Baums über den gesamten Bereich des Verschwenkens aktuell erfasst werden könnte.

Der Erfindung liegt deshalb die **Aufgabe** zugrunde, eine gattungsgemäße Sensoreinrichtung dahingehend weiterzubilden, dass sie eine verbesserte Erfassung der Position des gegenüber dem ersten Bauteil relativ bewegbaren zweiten Bauteils besser ermöglicht.

Als **Lösung** wird mit der Erfindung vorgeschlagen, dass mittels der Messeinrichtung die Position des zweiten Bauteils gegenüber dem ersten Bauteil entlang eines Teilabschnitts des Verfahrwegs des zweiten Bauteils gegenüber dem ersten Bauteil ermittelt wird, zu welchem Zweck die Position des Magneten innerhalb des Teilabschnitts mittels des Magnetfelddetektors ermittelbar ist.

Die erfindungsgemäße Sensoreinrichtung ermöglicht es somit, die Position des gegenüber dem ersten Bauteil relativ bewegbaren zweiten Bauteils nicht nur in einer oder zwei Vorzugsstellungen, beispielsweise den Endstellungen, zu ermitteln, sondern sie erlaubt es darüber hinaus, dass zumindest über einen Teil des Verfahrwegs die jeweils aktuelle Position ermittelt werden kann. Dabei kommt es nicht darauf an, ob der Verfahrweg ein linearer Verfahrweg, eine Kurve oder dergleichen ist. Er kann auch aus unterschiedlichen Kurvenarten zusammengesetzt sein. Somit eignet sich die Sensoreinrichtung der Erfindung nicht nur zur Erfassung von linearen Bewegungen, sondern auch von Kreisbewegungen, elliptischen Bewegungen oder zusammengesetzten Bewegungsabläufen unterschiedlichster Richtungen.

Das erste und das zweite Bauteil können beispielsweise Maschinenelemente sein, wie sie in Form eines Pfostens und eines an dem Pfosten drehbar gelagerten Baums eine Schranke bilden. Die beiden Bauteile können aber auch durch ein Ziffernblatt und einen Zeiger einer Uhr oder dergleichen gebildet sein. Insbesondere können die Bauteile Teile einer Kolben-Zylinder-Einheit sein, wobei ein Bauteil durch den Zylinder und das zweite Bauteil durch den Kolben gebildet sein kann. Die Zuordnung kann natürlich auch umgekehrt sein. Selbstverständlich können natürlich die beiden Bauteile gemeinsam mobil oder ortsfest angeordnet sein. So kann beispielsweise die Sensoreinrichtung der Erfindung auch für eine Erfassung der Stellung eines Ruders oder einer Lenkung eines Fahrzeugs oder dergleichen zum Einsatz kommen. Die Position des zweiten Bauteils gegenüber dem ersten Bauteil kann durch eine Längenangabe, eine Winkelangabe, Kombinationen hiervon oder dergleichen gebildet sein. Natürlich kann die Position auch durch Angabe von Koordinaten auf einen Bezugspunkt angegeben sein. Der Bezugspunkt selber kann mit dem ersten Bauteil zusammenfallen. Besonders vorteilhaft erweist es sich, wenn die Sensoreinrichtung derart ausgebildet ist, dass sie die Position des zweiten Bauteils gegenüber dem ersten Bauteil entlang des gesamten Verfahrwegs des zweiten Bauteils gegenüber dem ersten Bauteil ermitteln kann.

Darüber hinaus lässt sich die Sensoreinrichtung nicht nur bei Schranken, sondern auch bei Drehtüren, anderen gesteuerten Passagen mit die Passage steuernden Elementen oder dergleichen einsetzen.

Damit die Sensoreinrichtung die Position bestimmen kann, ist sie mit einer Messeinrichtung versehen, die einen Magnetfelddetektor sowie einen Magneten aufweist. Die Messeinrichtung kann auch mehrere Magneten und/oder Magnetfelddetektoren umfassen. Darüber hinaus kann die Sensoreinrichtung zur Bestimmung mehrerer Positionen von gegenüber ersten Bauteilen relativ bewegbaren zweiten Bauteilen ausgebildet sein, Der Magnetfelddetektor kann beispielsweise durch einen Hall-Sensor, durch eine elektronische Spule oder Spulenanordnung, aber auch bewegbar gelagerte Magnete oder dergleichen gebildet sein. Der Magnet kann beispielsweise durch einen Permanentmagneten, aber auch durch einen Elektromagneten gebildet sein, welcher Elektromagnet einen Spule aufweisen kann, die bedarfsweise mit einem elektrischen Strom zwecks Ausbildung eines Magnetfeldes beaufschlagt wird. Natürlich können auch Kombinationen von Permanent- und Elektromagneten vorgesehen sein. Vorzugsweise ist der Magnet hinsichtlich der erzeugten magnetischen Flussdichte einstellbar. Als Magnet kann jedoch auch eine Einrichtung vorgesehen sein, die ein magnetisches Wechselfeld erzeugt. Darüber hinaus kann der Magnet mehrpolig ausgebildet sein, so dass vorzugsweise räumlich beabstandet Pole unterschiedlicher Polarität ausgebildet sind. Vorzugsweise hat der Magnet zwei oder vier Pole. Nord- und Südpol sind jeweils paarweise vorhanden.

Bei der Erfindung ist der Magnetfelddetektor vorzugsweise am ersten Bauteil angeordnet. In dieser Ausgestaltung kann der Magnetfelddetektor mit dem Bezugspunkt zur Positionsbestimmung zusammenfallen. Der Magnet ist dagegen dann am zweiten Bauteil angeordnet. Dadurch ist der Magnet gegenüber dem Magnetfelddetektor beweglich. Natürlich kann auch eine duale Ausgestaltung vorgesehen sein, bei der der Magnet am ersten Bauteil und der Magnetfelddetektor am zweiten Bauteil angeordnet sind. Grundsätzlich ist die Wahl der Anordnung durch konstruktive und funktionale Anforderungen bestimmt. So kann vorgesehen sein, dass der Magnet bei einer Kolben-Zylinder-Einheit am Kolben dieser Kolben-Zylinder-Einheit angeordnet ist, beispielsweise sogar den Kolben selbst bildet, und der Magnetfelddetektor mit dem Zylinder verbunden ist. Natürlich kann der Magnetfelddetektor auch mit dem Zylinder einstückig ausgebildet sein.

Damit die Position des Magneten innerhalb des Teilabschnitts mittels des Magnetfelddetektors ermittelbar ist, kann der Magnetfelddetektor sich über den Teilabschnitt des Verfahrwegs insgesamt erstrecken und selektive Detektionseigenschaften aufweisen, die es ermöglichen, die Position des Magneten gegenüber dem Magnetfelddetektor genau zu erfassen. Natürlich kann auch vorgesehen sein, dass der Magnet selbst sich über den Teilabschnitt des Verfahrwegs erstreckt und vorzugsweise über die Länge des Verfahrwegs sich ändernde magnetische Eigenschaften aufweist. Dadurch ist es dann möglich, mittels des Magnetfelddetektors anhand der lokal ermittelten magnetischen Eigenschaft festzustellen, welcher Teil des Magneten sich gegenüber dem Magnetfelddetektor befindet. Auch hieraus kann die Position ermittelt werden.

Der Magnetfelddetektor kann eine zumindest teilweise entlang des Verfahrwegs angeordnete elektrisch leitfähige Bahn aufweisen. So kann beispielsweise die Position dadurch ermittelt werden, dass ein entlang des Verfahrwegs magnetisch permeables Bauteil, welches eine hinreichende elektrische Leitfähigkeit aufweist, mit dem Magneten derart in Wechselwirkung tritt, dass ein Kontakt zur elektrisch leitfähigen Bahn hergestellt wird. Dadurch kann durch die Position des Bauteils erfasst werden, an welcher Stelle sich der Magnet befindet, da letzter das Bauteil aufgrund der magnetischen Eigenschaften anzieht. So lässt sich eine einfache Positionsbestimmung des zweiten Bauteils gegenüber dem ersten Bauteil erreichen. Die elektrisch leitfähige Bahn kann durch einen elektrischen Leiter wie beispielsweise einen Metalldraht, insbesondere einen Kupferdraht, einen Silberdraht, einen Golddraht, eine Legierung oder dergleichen gebildet sein. Der Metalldraht kann eine elektrisch leitfähige Legierung beinhalten. Darüber hinaus kann die elektrisch leitfähige Bahn natürlich auch durch eine Beschichtung gebildet sein, die auf dem ersten Bauteil angebracht ist. Beispielsweise kann die elektrisch leitfähige Bahn durch einen Metallniederschlag, beispielsweise Aluminium, Magnesium, Messing, Zinn, Bronze oder dergleichen gebildet sein. Die elektrisch leitfähige Bahn kann auch in Drucktechnik auf das erste Bauteil aufgebracht sein, beispielsweise durch eine aufgedruckte Kupferschicht oder dergleichen. Dies ermöglicht es, die elektrisch leitfähige Bahn auf einfache Weise herzustellen. Darüber hinaus kann die elektrisch leitfähige Bahn natürlich auch durch das erste Bauteil selbst gebildet sein, beispielsweise weil das erste Bauteil aus einem elektrisch leitfähigen Werkstoff gebildet ist. Die elektrisch leitfähige Bahn kann somit einstückig mit dem ersten Bauteil ausgebildet sein.

Darüber hinaus kann der Magnetfelddetektor eine vorzugsweise parallel zur elektrisch leitfähigen Bahn angeordnete Widerstandsbahn aufweisen. Durch die Widerstandsbahn kann erreicht werden, dass anhand eines gemessenen elektrischen Widerstands zwischen dem magnetisch permeablen Bauteils, welches vorzugsweise mit der Widerstandsbahn im Bereich des Magneten in Kontakt steht, sowie einem Bezugspotential, an dem die Widerstandsbahn angeschlossen ist, die Position des magnetisch permeablen Bauteils und somit auch die Position des zweiten gegenüber dem ersten Bauteil ermittelte werden. Dies ermöglicht eine einfache robuste Ausgestaltung. Weiterhin lässt sich die Widerstandsbahn beispielsweise in Form einer Kohleschicht, auf dem entsprechenden Bauelement abscheiden. Dadurch kann die Widerstandsbahn einstückig mit dem ersten beziehungsweise dem zweiten Bauteil ausgebildet sein.

Besonders vorteilhaft weist die Sensoreinrichtung sowohl die elektrisch leitfähige Bahn als auch die Widerstandsbahn auf. Vorzugsweise sind die elektrisch leitfähige Bahn und die Widerstandsbahn beabstandet zueinander angeordnet. Durch einen mittels des Magneten antreibbaren Kontakts kann eine elektrische Verbindung zwischen der Widerstandsbahn und der elektrisch leitfähigen Bahn hergestellt werden, und zwar an der Stelle, an der sich der Magnet befindet. Der Kontakt kann an dem magnetisch permeablen Bauteil angeordnet sein. Dies erlaubt es, durch Widerstandsmessung zwischen der elektrisch leitfähigen Bahn und der Widerstandsbahn die aktuelle Position des Magneten zu ermitteln, wodurch die Messeinrichtung mittels des ermittelten Widerstandswerts ein Signal liefert, welches die Bestimmung der Position des gegenüber dem ersten Bauteil relativ bewegbaren zweiten Bauteils erlaubt.

Der Magnetfelddetektor kann ein magnetisch permeables Bauteil aufweisen, welches vorzugsweise einen elektrischen Kontakt aufweist. Mit dem elektrischen Kontakt ist es möglich, die elektrisch leitfähige Bahn und die Widerstandsbahn zu kontaktieren und auf diese Weise einen einstellbaren elektrischen Widerstand zu bilden. Das magnetisch permeable Bauteil steht in magnetischer Wechselwirkung mit dem Magneten und wird durch diesen angezogen. Dadurch wird der elektrische Kontakt an der Stelle hergestellt, an der sich der Magnet gegenüber dem Magnetfelddetektor befindet. Die hieraus gebildete Messeinrichtung liefert somit ein zuverlässiges Signal, aus welchem die Position des gegenüber dem ersten Bauteil relativ bewegbaren zweiten Bauteils ermittelt werden kann. Der elektrische Kontakt kann beispielsweise durch einen Federkontakt oder dergleichen gebildet sein. Beispielsweise ist der Kontakt aus einem vergoldeten Federstahl oder einer Berylliumlegierung gebildet.

Eine vorteilhafte Weiterbildung zeichnet sich dadurch aus, dass die elektrisch leitfähige Bahn und/oder die Widerstandsbahn magnetisch permeabel sind. Dadurch kann erreicht werden, dass an der Stelle des Magneten zwischen der elektrisch leitfähigen Bahn und der Widerstandsbahn aufgrund des Magnetfeldes durch elektrische Einwirkungen ein elektrischer Kontakt hergestellt wird. Diese Ausgestaltung zeichnet sich unter anderem dadurch aus, dass sie mit wenig bewegbaren Bauteilen auskommt und somit eine hohe Zuverlässigkeit über die gesamte Betriebsdauer erreicht werden kann.

Die elektrisch leitfähige Bahn und/oder die Widerstandsbahn können hierfür eine magnetisch permeable Schicht aufweisen. Die magnetisch permeable Schicht kann durch in die Bahn eingebrachte magnetisch permeable Partikel, insbesondere Ferritpartikel oder dergleichen gebildet sein. Als Werkstoffe kommen neben den Metallen Eisen, Nickel, Kobalt sowie deren Legierungen auch heuslersche Legierungen in Betracht. Darüber hinaus besteht die Möglichkeit, die jeweilige Bahn in einem Sol-Gel-Prozess auszubilden. Besonders vorteilhaft bilden die elektrisch leitfähige Bahn und/oder die Widerstandsbahn im Bereich eines magnetischen Feldes einen elektrischen Kontakt aus, insbesondere einen direkten elektrischen Kontakt ohne Vermittlung weiterer Bauteile. Die elektrisch leitfähige Bahn und/oder die Widerstandsbahn können hierfür eine geeignete Elastizität aufweisen, die es erlaubt, den elektrischen Kontakt zwischen den beiden Bahnen direkt ausbilden zu können. Hierdurch kann eine bauteilearme hochzuverlässige Messeinrichtung geschaffen werden.

Insbesondere können die Widerstandsbahn und/oder die elektrisch leitfähige Bahn einstückig mit der magnetisch permeablen Schicht ausgebildet sein. Hierzu kann beispielsweise vorgesehen sein, dass entsprechend magnetisierbare, insbesondere ferromagnetische Partikel in den Werkstoff der jeweiligen Bahn eingebracht sind.

Natürlich kann für die Funktion lediglich eine der beiden Bahnen die magnetische Permeabilität aufweisen. Besonders vorteilhaft erweist es sich jedoch, wenn beide Bahnen magnetisch permeabel ausgebildet sind. Dadurch kann bereits mit geringen magnetisch permeablen Eigenschaften eine zuverlässige Funktion der Erfindung erreicht werden.

In einer Weiterbildung kann vorgesehen sein, dass der Magnetfelddetektor eine Mehrzahl von entlang des Verfahrwegs angeordneten Magnetfeldsensoren aufweist. Die Magnetfeldsensoren können in einer Reihe parallel zum Verfahrweg angeordnet sein. Ein Abstand zwischen dem Verfahrweg und der Reihe kann variieren, beispielsweise sinusförmig, rechteckförmig oder dergleichen. Jeder einzelne Magnetfeldsensor kann in einem lokal begrenzten Bereich die Anwesenheit des Magneten detektieren. Dadurch kann die Position des Magneten anhand des jeweiligen Sensorsignals des Magnetfeldsensors identifiziert werden, wenn die Position des jeweiligen Magnetfeldsensors zuvor definiert ist. Die lokal begrenzten Bereiche insbesondere benachbarter Magnetfeldsensoren können sich auch überlappen. Die Magnetfeldsensoren können natürlich jeweils wie der zuvor beschriebene Magnetfelddetektor ausgebildet sein. Darüber hinaus können die Magnetfeldsensoren auch Hallsonden, Spulen, Spulenanordnungen oder dergleichen aufweisen. Natürlich können auch die vorgenannten Arten der Magnetfeldsensoren miteinander kombiniert den Magnetfelddetektor bilden. So können beispielsweise Hall-Sensoren mit Spulenanordnungen kombiniert sein.

Vorzugsweise sind die Magnetfeldsensoren benachbart, vorzugsweise unmittelbar benachbart zueinander angeordnet. Die Magnetfeldsensoren können in einem Abstand von etwa 2 mm, vorzugsweise 1 mm, oder weniger angeordnet sein. Sie können auch direkt aneinander angrenzen. Unmittelbar benachbart oder auch direkt benachbart sind zwei Magnetfeldsensoren, wenn auf einer virtuellen Verbindungsgerade zwischen ihnen kein weiterer Magnetfeldsensor angeordnet ist. Die benachbarte Anordnung der Magnetfeldsensoren ermöglicht eine weitgehend kontinuierliche Bestimmung der Position des gegenüber dem ersten Bauteil relativ bewegbaren zweiten Bauteils. Insbesondere kann eine hohe Auflösung bei der Bestimmung der Position erreicht werden. Darüber hinaus kann durch die Kombination unterschiedlicher Magnetfeldsensoren erreicht werden, dass diese sich möglichst wenig gegenseitig beeinflussen, wodurch die Messgenauigkeit erhöht werden kann.

Eine Ausgestaltung sieht vor, dass wenigstens in einem Bereich des Teilabschnitts des Verfahrwegs die Magnetfeldsensoren auch quer zum Verfahrweg angeordnet sind. Hierdurch kann eine verbesserte Auflösung der Position des zweiten gegenüber dem ersten Bauteil innerhalb des Bereichs erreicht werden. Die Magnetfeldsensoren können in Reihen angeordnet sein, die im wesentlichen parallel zueinander ausgerichtet sind. Beispielsweise können die Magnetfeldsensoren in Matrixform angeordnet sein. Es kann ferner vorgesehen sein, dass die Magnetfeldsensoren mit einem Mindestabstand beabstandet angeordnet sind, zum Beispiel ein Abstand von größer etwa 0,5 mm, vorzugsweise von größer etwa 1 mm insbesondere von größer etwa 1,5 mm. Der Bereich kann beispielsweise eine Vorzugslage des zweiten Bauelements gegenüber dem ersten Bauelement sein, beispielsweise eine Endposition oder dergleichen. Darüber hinaus können natürlich auch zwei oder mehrere Bereiche derart ausgestaltet sein, um eine verbesserte Auflösung in diesen Bereichen erreichen zu können. Die Magnetfeldsensoren können in mehreren parallel zum Verfahrweg ausgerichteten Reihen benachbart zueinander angeordnet sein. Darüber hinaus können die Magnetfeldsensoren benachbarter Reihen auch gegenüber einander versetzt angeordnet sein, wodurch sich eine weitere Verbesserung der Auflösung erreichen lässt. Zwecks weiterer Verbesserung der Auflösung können die Magnetfeldsensoren auswertungsseitig zumindest teilweise gemeinsam ausgewertet werden, um die Auflösung und die Detektionsfähigkeit weiter zu erhöhen. So können beispielsweise Gruppen von Magnetfeldsensoren gebildet werden, die jeweils gemeinsam ausgewertet werden. Besonders vorteilhaft erweist es sich, wenn die Auswertung der Magnetfeldsensoren derart ist, dass sich störende Einflüsse während der Auswertung ausgleichen, so dass eine besonders zuverlässige Bestimmung der Position erreicht werden kann.

Die Magnetfeldsensoren können in Reihen aufeinanderfolgend angeordnet sein. Die Reihen können die gleiche Länge oder auch unterschiedliche Längen aufweisen. Vorzugsweise ist die Anzahl von Magnetfeldsensoren pro Längeneinheit der Reihen gleich. Sie kann aber auch unterschiedlich sein, um zum Beispiel Bereiche unterschiedlicher Auflösung zu schaffen oder dergleichen. Die Magnetfeldsensoren können ein regelmäßiges Muster bildend, beispielsweise matrixartig angeordnet sein. Die Magnetfeldsensoren direkt benachbarter Reihen können einen vorgegebenen Abstand zueinander haben. Die können aber auch direkt aneinander angrenzen. Direkt benachbart bedeutet, dass zwischen zwei direkt benachbarten Reihen keine weitere Reihe angeordnet ist.

Eine vorteilhafte Weiterbildung sieht vor, dass die Magnetfeldsensoren benachbarter Reihen versetzt zueinander angeordnet sind, Dies ermöglicht es, die Auflösung für die Positionsbestimmung weiter zu erhöhen. Insbesondere kann eine höhere Auflösung erreicht werden, als sie mit einer einzigen Reihe von Magnetfeldsensoren erreicht werden kann. Dazu können direkt benachbart angeordnete Magnetfeldsensoren unterschiedlicher Reihen gemeinsam ausgewertet werden. Die gemeinsame Auswertung unter insbesondere Berücksichtigung von Eigenschaften der Magnetfeldsensoren erlaubt es, die Auflösung über das Auflösungsvermögen eines einzelnen Magnetfeldsensors hinaus zu erhöhen. Hierfür kann ein besonderer Auswertealgorithmus zum Einsatz kommen, der durch ein geeignetes Rechnerprogramm für einen Rechner gebildet sein kann.

Ferner kann sich der Magnetfelddetektor beziehungsweise der Magnet über die Länge des gesamten Verfahrwegs des am Kolben angeordneten Magneten beziehungsweise des am Kolben angeordneten Magnetfelddetektors erstrecken. Dadurch ist es möglich, die Position des gegenüber dem ersten Bauteil relativ bewegbaren zweiten Bauteils über den gesamten möglichen Verfahrweg zu bestimmen. So kann beispielsweise bei einer Kolben-Zylinder-Einheit vorgesehen sein, dass die Position des Kolbens gegenüber dem Zylinder in jeder möglichen Kolbenstellung zu jeder beliebigen Zeit ermittelt werden kann. Hierfür kann die Messeinrichtung ein entsprechendes Signal liefern, welches von einer Steuereinheit ausgewertet wird. Es kann darüber hinaus vorgesehen sein, dass die Steuereinheit die Messeinrichtung zur Abgabe eines Signals veranlasst. Dies kann kontinuierlich erfolgen. Es kann aber auch vorgesehen sein, dass die Abfrage jeweils zu vorgegebenen Zeitpunkten, beispielsweise zeitdiskret erfolgt.

Der Magnetfelddetektor kann ferner einen magnetischen Rückschluss aufweisen. Der magnetische Rückschluss erstreckt sich vorzugsweise über den gesamten Magnetfelddetektor. Der magnetische Rückschluss kann ferner an einer Rückseite des Magnetfelddetektors angeordnet sein, die dem Magneten gegenüberliegt. Der magnetische Rückschluss kann durch einen magnetisch permeablen Werkstoff gebildet sein, beispielsweise einem Ferrit, einem Eisen- und/oder Nickelblech, einer magnetisch permeablen Legierung oder dergleichen. Besteht der Magnetfelddetektor aus Magnetfeldsensoren, kann der magnetische Rückschluss auch an einem oder mehreren der Magnetfeldsensoren angeordnet sein. Vorzugsweise ist der magnetische Rückschluss an allen Magnetfeldsensoren angeordnet. Der magnetische Rückschluss kann einstückig mit dem Magnetfelddetektor beziehungsweise den Magnetfeldsensoren ausgebildet sein. Er kann ferner bei einem durch Magnetfeldsensoren segmentierten Magnetfelddetektor durch eine Vielzahl von magnetischen Rückschlusselementen an den einzelnen Magnetfeldsensoren gebildet sein. Vorzugsweise stehen die einzelnen magnetischen Rückschlusselemente miteinander in magnetischer Wechselwirkung, so dass sie im Wesentlichen eine Wirkung haben, wie ein einteiliger magnetischer Rückschluss. Der magnetische Rückschluss kann mittels bekannter Verbindungstechnik wie Klemmen, Kleben, Schrauben oder dergleichen am Magnetfelddetektor befestigt sein. Er kann aber auch durch eine zusätzliche Schicht gebildet sein, die einstückig mit dem Magnetfelddetektor ausgebildet ist, beispielsweise indem diese Schicht auf der Rückseite des Magnetfelddetektors mittels bekannter Verfahren abgeschieden wird.

Mit der Erfindung wird ferner eine Schranke mit einem an einem Pfosten bewegbar gelagerten Baum vorgeschlagen, welcher Baum mittels einer Kolben-Zylinder-Einheit bewegbar ist. Erfindungsgemäß weist die Kolben-Zylinder-Einheit eine Sensoreinrichtung der Erfindung auf. Hierdurch ist es möglich, zuverlässig und mit geringem Aufwand die aktuelle Stellung des Baums gegenüber dem Pfosten zu bestimmen. Die Erfindung ermöglicht es, die Kolben-Zylinder-Einheit als eine Standardbaugruppe mit unterschiedlichsten Schranken beziehungsweise Baum und Pfostenkombinationen zu kombinieren. Derartige Schranken finden natürlich nicht nur bei der Parkraumbewirtschaftung Verwendung, sondern können zum Beispiel auch bei Bahnübergängen, in Wartebereichen oder dergleichen zum Einsatz kommen.

Dadurch dass die Kolben-Zylinder-Einheit mit der erfindungsgemäßen Sensoreinrichtung verbunden ist, kann eine Steuerung der Kolben-Zylinder-Einheit auf einfache Weise quasi beliebig an unterschiedlichste Schranken beziehungsweise Baum und Pfostenkombinationen angepasst werden. Dies kann zum Beispiel dadurch erreicht werden, dass die jeweils für eine ausgewählte Schranke beziehungsweise Baum und Pfostenkombination vorgegebenen Endstellungen mittels der Sensoreinrichtung erfasst und von einer Steuerung ausgewertet werden. So kann der Baum entsprechend der vorgegebenen Stellungen verfahren werden. Damit das Verschwenken des Baums entsprechend gesteuert werden kann, kann eine Vergleichsschaltung vorgesehen sein, die ein Messsignal der Messeinrichtung mit einem oder mehreren Vergleichswerten vergleicht und ein oder mehrere dementsprechende Signale abgibt. Die Vergleichswerte können Vorzugstellungen des Baumes, beispielsweise seinen vorgegebenen beziehungsweise vorgebbaren Endstellungen entsprechen. Die Erfindung ermöglicht es darüber hinaus, auch Zwischenstellungen des Baumes gegenüber dem Pfosten gezielt anzufahren. Durch einen einfachen Kalibrierungsvorgang kann somit eine Anpassung einer standardisierten Kolben-Zylinder-Einheit an eine beliebige Schranke erreicht werden. Aber auch für die Überwachung der Funktion der Schranke stellt die Erfindung eine wesentliche Verbesserung dar. Sie erlaubt es festzustellen, ob eine vorgegebene anzufahrende Stellung durch den Baum erreicht worden ist oder auch welche Stellung der Baum aktuell einnimmt. Hierdurch kann eine Diagnosefunktion ermöglicht werden, mit der Störungszustände der Schranke, insbesondere bezüglich Fehlstellungen des Baumes oder dergleichen zum Beispiel in Ferndiagnose vorzugsweise unter Vermittlung der Steuerung erkannt und identifiziert werden können. Dies verbessert die Fernwartungsmöglichkeiten. Wartungsmaßnahmen können ohne eine vorhergehende Inspektion vor Ort an der Schranke geplant werden, wodurch Wartungskosten reduziert werden können. Zugleich kann auch die Sicherheit bezüglich des bestimmungsgemäßen Betriebs der Schranke verbessert werden.

Grundsätzlich gilt dies natürlich nicht nur für die Anwendung bei einer Schranke sondern auch bei Kolben-Zylinder-Einheiten im Allgemeinen sowie Vorrichtungen mit vergleichbaren Antrieben, wie elektrische Antriebe, pneumatische Antriebe oder dergleichen.

Der Pfosten bildet zum Beispiel das erste Bauteil, wohingegen der Baum das zweite Bauteil bildet. Die Kolben-Zylinder-Einheit ist vorzugsweise hydraulisch angetrieben. Sie kann aber auch pneumatisch angetrieben sein. Die Zuordnung des Pfostens und des Baums zu dem ersten und dem zweiten Bauteil kann natürlich umgekehrt sein.

Ferner kann vorgesehen sein, dass die Magnetfeldsensoren, die Widerstandsbahn und/oder die elektrisch leitfähige Bahn einstückig mit dem Zylinder und/oder dem Kolben ausgebildet sind. Hierdurch können separate Bauteile eingespart werden. Darüber hinaus lässt sich ein sehr kompakter Aufbau erreichen, wodurch die Zuverlässigkeit und die Lebensdauer erhöht werden können. So kann beispielsweise vorgesehen sein, dass die Widerstandsbahn entlang eines Kolbenhubwegs an der Außenseite des Zylinders aufgebracht ist. Beabstandet hierzu und mit einer entsprechenden Elastizität versehen kann beispielsweise die elektrisch leitfähige Bahn mit einer magnetischen Permeabilität angeordnet sein. Der Kolben kann den Magneten umfassen. An der Stelle, wo sich der Kolben mit dem Magneten befindet, wird die elektrisch leitfähige Bahn aufgrund ihrer magnetischen Permeabilität angezogen und stellt einen elektrischen Kontakt zur Widerstandsbahn her. Durch Messung des elektrischen Widerstands zwischen der elektrisch leitfähigen Bahn und einem vorzugsweise an einem der beiden Enden der Widerstandsbahn vorgesehenen Anschluss der Widerstandsbahn kann somit aufgrund des gemessenen Widerstands die Position des Kolbens im Zylinder ermittelt werden. Dadurch, dass separate bewegliche Bauteile weitgehend entfallen können, lässt sich eine derart ausgebildete Schranke aufgrund ihrer hohen Zuverlässigkeit auch im öffentlichen Verkehrsbereich als Sicherheitsschranke, beispielsweise als Bahnschranke oder dergleichen einsetzen.

Vorzugsweise ist der Zylinder aus einem im Wesentlichen magnetisch unpermeablen Werkstoff gebildet. Dadurch kann das Magnetfeld die Zylinderwand gut durchdringen und den Magnetfelddetektor betätigen, indem der Magnetfelddetektor entsprechend mit Magnetfeld beaufschlagt wird. Natürlich lässt sich auch eine duale Ausgestaltung dadurch erreichen, dass der Magnetfelddetektor am Kolben und der Magnet am Zylinder angeordnet ist.

Magnetisch permeabel ist ein Werkstoff, der seine Eigenschaften aufgrund eines äußeren magnetischen Feldes verändert. Insbesondere ist diesbezüglich der Ferromagnetismus zu nennen, wie er beispielsweise in Eisen, Kobalt und Nickel sowie deren Legierungen auftritt. Darüber hinaus sind diesbezüglich auch Werkstoffe zu nennen, die einen Paramagnetismus oder einen Ferrimagnetismus aufweisen. Ein unmagnetischer Stoff ist ein Stoff, der im Allgemeinen durch magnetische Felder unbeeinflussbar ist.

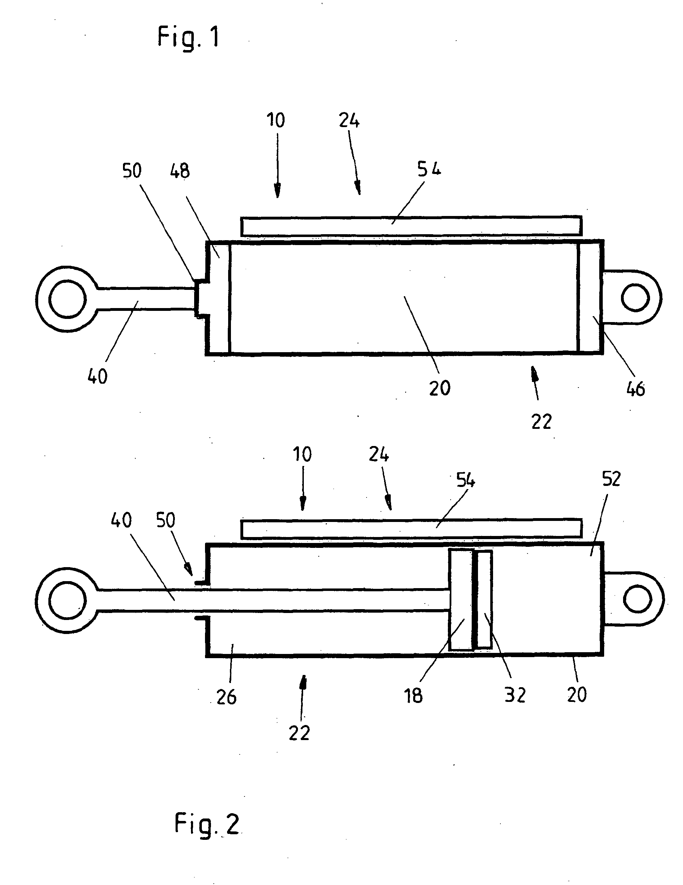

Weitere Vorteile und Merkmale sind der folgenden Beschreibung von Ausführungsbeispielen zu entnehmen. Im Wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel gemäß Figur 1 verwiesen. Die Zeichnungen sind Schemazeichnungen und dienen lediglich der Erläuterung der folgenden Ausführungsbeispiele.

Es zeigen:
- Fig. 1: eine Kolben-Zylinder-Einheit mit einer Sensoreinrichung der Erfindung in einer schematischen Seitenansicht,
- Fig. 2: die Kolben-Zylinder-Einheit gemäß Fig. 1 in einer Schnittansicht,
- Fig. 3: eine Ausgestaltung der Kolben-Zylinder-Einheit gemäß Figur 1 mit einer Messeinrichtung der Erfindung, die Hallsonden aufweist,
- Fig. 4: eine vergrößerte Darstellung des Bereichs IV aus Figur 3,
- Fig. 5: eine Schranke mit einer Kolben-Zylinder-Einheit gemäß Figur 3 in einem sperrenden Zustand,
- Fig. 6: die Schranke gemäß Figur 5 in einem öffnenden Zustand,
- Fig. 7: eine Sensoreinrichtung gemäß der Erfindung mit einem Magnet-Widerstandssensor und
- Fig. 8: eine alternative Ausgestaltung eines Magnetfelddetektors, wie er anhand der Fign. 3 und 4 beschrieben ist.

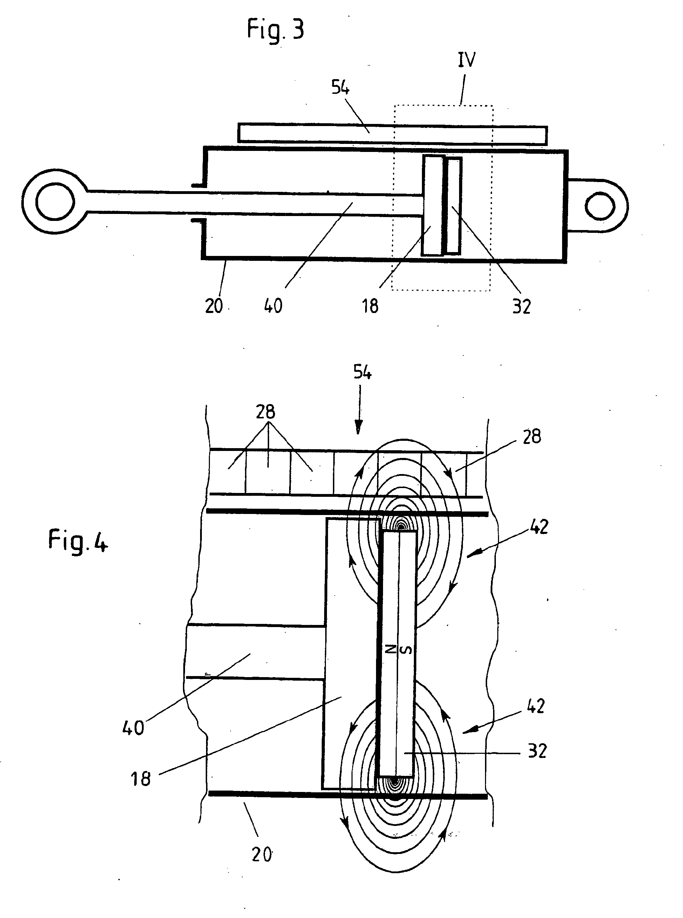

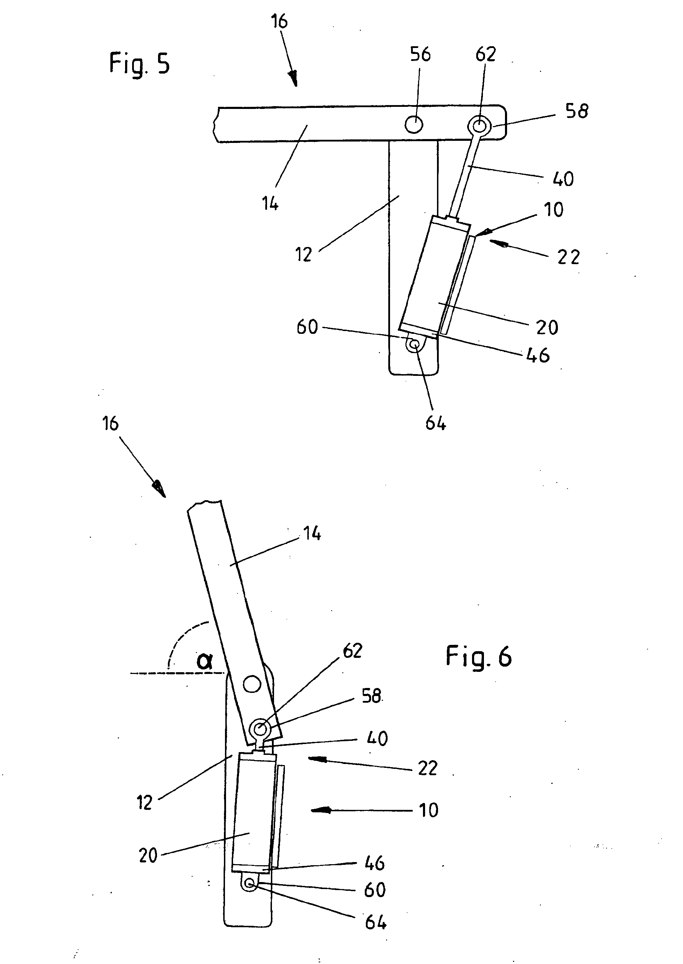

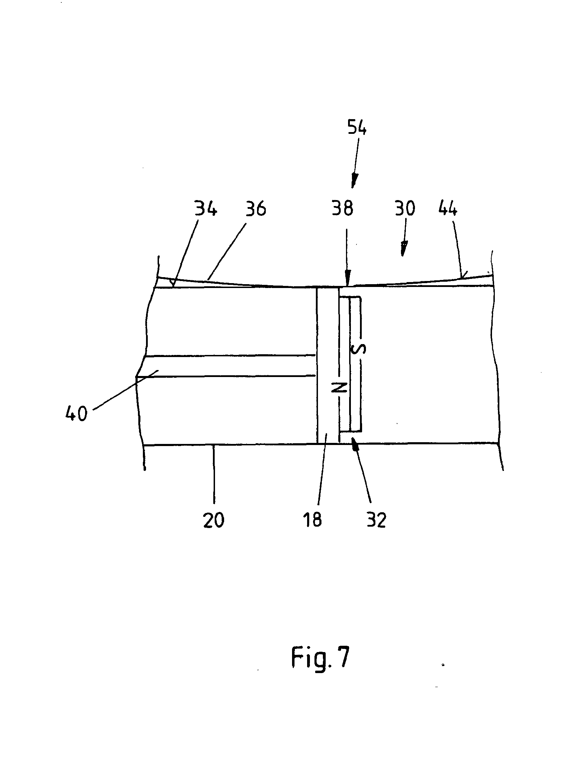

Die Figuren 1 und 2 in Verbindung mit den Figuren 5 und 6 stellen diesbezüglich eine Übersichtsdarstellung dar. Die Figuren 3 und 4 konkretisieren dies im Rahmen einer ersten Ausgestaltung der Erfindung, wohingegen Fig. 7 eine zweite alternative Ausgestaltung beschreibt.

Figur 1 zeigt in einer Seitenansicht eine Kolben-Zylinder-Einheit 22, die einen Zylinder 20 als erstes Bauteil aufweist, in der ein Kolben 18 (Fig. 2) als zweites Bauteil mit einer Kolbenstange 40 längsverschieblich gelagert ist. Die Kolben-Zylinder-Einheit 22 ist mit einem nicht näher genannten Hydraulikmedium beaufschlagt, mittels welchem die Position des Kolbens 18 innerhalb des Zylinders 20 eingestellt werden kann. Hierzu verfügt der Zylinder 20 über nicht dargestellte Anschlüsse für das Hydraulikmedium, das einem Bereich 52 des Zylinders 20 zugeführt beziehungsweise entnommen werden kann. Über eine steuerbare Hydraulikmediumquelle wird dem Zylinder 20 entsprechend der gewünschten Stellung des Kolbens 18 Hydraulikmedium zugeführt beziehungsweise entnommen, so dass der Kolben 18 die gewünschte Position einnehmen kann. An seinen Enden ist der Zylinder 20 mittels Verschlussdeckeln 46, 48 verschlossen. Der Verschlussdeckel 46 ist dabei hydraulisch dicht. Der Verschlussdeckel 48 weist eine Führung 50 für die Kolbenstange 40 auf und erlaubt zudem eine Durchströmung von Luft.

In Figur 2 ist die Kolben-Zylinder-Einheit 22 der Figur 1 in Schnittansicht dargestellt. Zu erkennen ist hier, dass der Kolben 18 mit der Kolbenstange 40 verbunden ist. Der Kolben 18 ist ferner mittels einer nicht näher dargestellten Dichtung im Zylinder 20 geführt, so dass das Hydraulikmedium, welches sich im rechten Bereich 52 der dargestellten Kolben-Zylinder-Einheit 22 befindet, nicht austreten kann. Durch Zuführung beziehungsweise Abführung von Hydraulikmedium aus dem Bereich 52 des Zylinders 20 kann somit die Stellung des Kolbens 18 eingestellt werden.

Wie aus den Figuren 1 und 2 ersichtlich ist, weist die Kolben-Zylinder-Einheit 22 eine Sensoreinrichtung 10 gemäß der Erfindung auf, die eine Messeinrichtung 24 umfasst. Die Messeinrichtung erfasst die Position des Kolbens 18 im Zylinder 20 und liefert ein der Position identifizierendes Signal. Die Messeinrichtung 24 weist vorliegend einen Magnetfelddetektor 54 sowie einen Magneten 32 auf, der in diesem Ausführungsbeispiel durch einen Permanentmagneten gebildet ist. Der Magnetfelddetektor 54 erstreckt sich vorliegend über den Verfahrweg des Kolbens 18 im Rahmen eines Kolbenhubs im Zylinder 20. Der Permanentmagnet 32 ist an einer nicht bezeichneten Oberfläche des Kolbens 18 befestigt, die dem Bereich 52 zugewandt ist.

Die Messeinrichtung 24 ist vorliegend derart ausgebildet, dass sie unter Auswertung des Magnetfelddetektors 54 ein Signal liefert, welches in Abhängigkeit der Position des durch den Permanentmagneten 32 erzeugten Magnetfelds ist. Hierfür kann die Messeinrichtung 24 Signale und/oder Betriebszustände des Magnetfelddetektors 54 abfragen und informationstechnisch verarbeiten. Hieraus ermittelt die Messeinrichtung 24 das die Position des Kolbens 18 im Zylinder 20 identifizierende Signal. Das Signal kann aber auch direkt ein Signal des Magnetfelddetektors 54 sein, das heißt, dass die Messeinrichtung 24 das Signal des Magnetfelddetektors 54 nicht verarbeitet sondern direkt als das die Position identifizierende Signal ausgibt. Dadurch kann mittels des vom Magnetfelddetektor 54 gelieferten Signals die Position des Permanentmagneten 32 innerhalb des Zylinders 20 und demzufolge auch die Position des Kolbens 18 innerhalb des Zylinders 20 ermittelt werden. Das Signal wird von der Messeinrichtung 24 beziehungsweise Sensoreinrichtung 10 an eine nicht näher dargestellte Steuerung übermittelt, die das Signal entsprechend auswertet und daraus eine konkrete Positionsinformation des gegenüber dem Zylinder 20 relativ bewegbaren Kolben 18 bestimmt.

Figur 3 zeigt die Kolben-Zylinder-Einheit der Figuren 1 und 2 in Schnittansicht mit einem Magnetfelddetektor 54, der aus einer Vielzahl von entlang des Verfahrwegs 26 angeordneten Hall-Sonden 28 gebildet ist. Figur 4 zeigt eine vergrößerte Darstellung des Bereichs IV in Figur 3. Deutlich zu erkennen ist, dass der Magnetfelddetektor 54 aus direkt benachbart zueinander angeordneten Hall-Sonden 28 besteht. Diese erstrecken sich über den Verfahrweg 26 des Kolbens 18 im Zylinder 20. Wie aus Figur 4 ferner ersichtlich ist, ist der Permanentmagnet mit seinem Nordpol mit dem Kolben verbunden. Der Südpol ist dagegen dem Bereich 52 zugewandt. Hierdurch bildet sich ein Magnetfeld aus, wie es anhand von Bezugszeichen 42 in der Figur 4 dargestellt ist. Das Magnetfeld 42 des Permanentmagneten 32 durchdringt die vorzugsweise magnetisch nicht leitfähige Wand des Zylinders 20 und den entlang des Verfahrwegs 26 angeordneten Magnetfelddetektor 54.

Das Magnetfeld 42 durchdringt somit einen Teil der Hall-Sonden 28, die sich benachbart im Bereich des Permanentmagneten 32 befinden. Die entsprechenden Hall-Sonden 28 liefern ein dem sie durchdringenden Magnetfeld entsprechendes Signal, welches mittels der nicht dargestellten Steuerung ausgewertet wird. Hieraus gewinnt die Steuerung eine Positionsinformation und liefert als Ausgangssignal ein entsprechendes Positionssignal als Signal der Sensoreinrichtung 10.

Für langsame Bewegungen des Kolbens 18 gegenüber dem Zylinder 20 sowie für stationäre Zustände ist es nicht erforderlich, dass der Zylinder 20 aus einem nichtelektrisch leitfähigen Werkstoff gebildet ist. Bei hinreichend starkem Permanentmagneten 32 kann durch entsprechende Anordnung und Empfindlichkeit des Magnetfelddetektors 54 trotzdem die Position des Kolbens 18 im Zylinder 20 ermittelt werden. Für eine Verfolgung von schnellen Änderungen des Kolbens 18 im Zylinder 20 empfiehlt es sich jedoch, die elektrische Leitfähigkeit des Zylinders 20 möglichst gering zu wählen, um eine Schirmwirkung aufgrund von Wirbelstromeffekten möglichst zu vermeiden. Der Zylinder 20 kann hierfür auch geschichtet mit Isolationen zwischen den einzelnen Schichten ausgebildet sein, um die Wirbelstromausbildung zu vermeiden.

Figur 5 zeigt in einer schematischen Seitenansicht eine Schranke 16, die einen gegenüber einem Pfosten 12 schwenkbar gelagerten Baum 14 aufweist. In der Darstellung gemäß Figur 5 befindet sich die Schranke 16 im sperrenden Zustand. In einem Drehpunkt 56 am Pfosten 12 ist der Baum 14 schwenkbar gelagert. Ferner ist an einem Zapfen 62 des Baums 14 ein Verbindungsflansch der Kolbenstange 40 angelenkt. Ebenso weist der Verschlussdeckel 46 einen Verbindungsflansch 60 auf, der an einem Zapfen 64 des Pfostens 12 angelenkt ist. Durch diese Konstruktion ist es möglich, mittels des Kolbenhubs des Kolbens 18 im Zylinder 20 den Baum 14 der Schranke 16 zwischen den Endstellungen, und zwar dem sperrenden Zustand und dem öffnenden Zustand, zu verschwenken.

Mittels der an der Kolben-Zylinder-Einheit 22 vorgesehenen Sensoreinrichtung 10 der Erfindung kann nun die jeweilige Position des Kolbens 18 im Zylinder 20 und wegen der eindeutigen Zuordnung der Kolbenstellung des Kolbens 18 im Zylinder 20 zur Schwenkstellung des Baumes 14 gegenüber dem Pfosten 12 der Schranke 16 damit auch die Schwenkposition des Baums 14 gegenüber dem Pfosten 12 ermittelt werden. Die Erfindung erlaubt es somit, die Schwenkposition des Baumes 14 in beliebigen Winkelstellungen zu erfassen und mittels der Sensoreinrichtung 10 ein entsprechendes Signal zu liefern. Dadurch kann eine zuverlässige Erfassung der Schwenkposition des Baums 14 erreicht werden. Auch Fehlstellung können erfasst werden, wenn die Sensoreinrichtung für einen kontinuierlichen oder wenigstens zeitdiskret wiederholten Betrieb vorgesehen ist.

Grundsätzlich kann natürlich auch vorgesehen sein, dass die Sensoreinrichtung 10 anstelle der Kolben-Zylinder-Einheit 22 direkt an der Schranke 16 angeordnet ist, beispielsweise indem der Permanentmagnet 32 am Baum 14 und der Magnetfelddetektor 54 am Pfosten 12 angeordnet sind.

Darüber hinaus kann die Sensoreinrichtung 10 eine nicht dargestellte Vergleichsschaltung aufweisen, die ein von der Messeinrichtung 24 geliefertes Signal mit einem Vergleichswert vergleicht. Der Vergleichswert kann einer Vorzugsstellung des zweiten Bauelements, hier der Kolben 18, gegenüber dem ersten Bauelement, hier der Zylinder 20, entsprechen, was in diesem Ausführungsbeispiel einer Vorzugsstellung des Baums 14 gegenüber dem Pfosten 12 entspricht. Mittels der Vergleichsschaltung kann ein Signal erzeugt werden, wenn das zweite Bauteil die Vorzugsstellung gegenüber dem ersten Bauteil einnimmt. Das Signal kann beispielsweise mittels Fernkommunikationsmitteln an eine Zentrale übermittelt werden. Durch die Vergleichsschaltung kann auch die Funktion eines Endschalters mit der Sensoreinrichtung der Erfindung realisiert werden.

Figur 7 zeigt eine alternative Ausgestaltung eines Magnetfelddetektors 54. Die grundsätzliche Anordnung und Funktion des Magnetfelddetektors 54 entspricht der Ausgestaltung des vorhergehenden Ausführungsbeispiels, weshalb diesbezüglich auf dieses verwiesen wird. Im Unterschied zum vorhergehenden Ausführungsbeispiel besteht der Magnetfelddetektor 54 in dieser Ausgestaltung aus einer elektrisch leitfähigen Bahn 34 aus Kupfer, die entlang des Verfahrwegs 26 an der äußeren Zylinderwand des Zylinders 20 aufgebracht ist. Die Kupferschicht ist an ihrer äußeren Oberfläche vergoldet. Beabstandet hierzu und direkt gegenüberliegend ist eine Widerstandsbahn 36 aus einem Widerstandsmaterial angeordnet. Vorliegend ist als Widerstandsmaterial Konstantan vorgesehen. Die Widerstandsbahn ist bandförmig ausgebildet und über nicht näher dargestellte Abstandshalter auf einen vorgegebenen Abstand zur elektrisch leitfähigen Bahn 34 gehalten. An seiner der elektrisch leitfähigen Bahn 34 gegenüberliegenden Seite weist die Widerstandsbahn 36 eine magnetisch permeable Schicht 44 auf. Diese besteht aus einem Ferrrit-Komplex. Diese magnetisch permeable Schicht 44 wird aufgrund des Magnetfeldes des Permanentmagneten 32 einer Anziehungskraft ausgesetzt. Dadurch tritt die Widerstandsbahn 36 im Bereich des Permanentmagneten 32 in Kontakt mit der elektrisch leitfähigen Bahn 34 und bildet hierdurch einen elektrischen Kontakt 38. An einem der beiden Enden der elektrischen Widerstandsbahn 36 und der elektrisch leitfähigen Bahn 34 ist ein Widerstandsmessgerät angeschlossen, welches den jeweiligen elektrischen Widerstand ermittelt. Die nicht näher bezeichnete Steuerung ermittelt aus dem Widerstandswert die aktuelle Position des Kolbens 18 und übermittelt ein entsprechendes Signal an eine Zentrale.

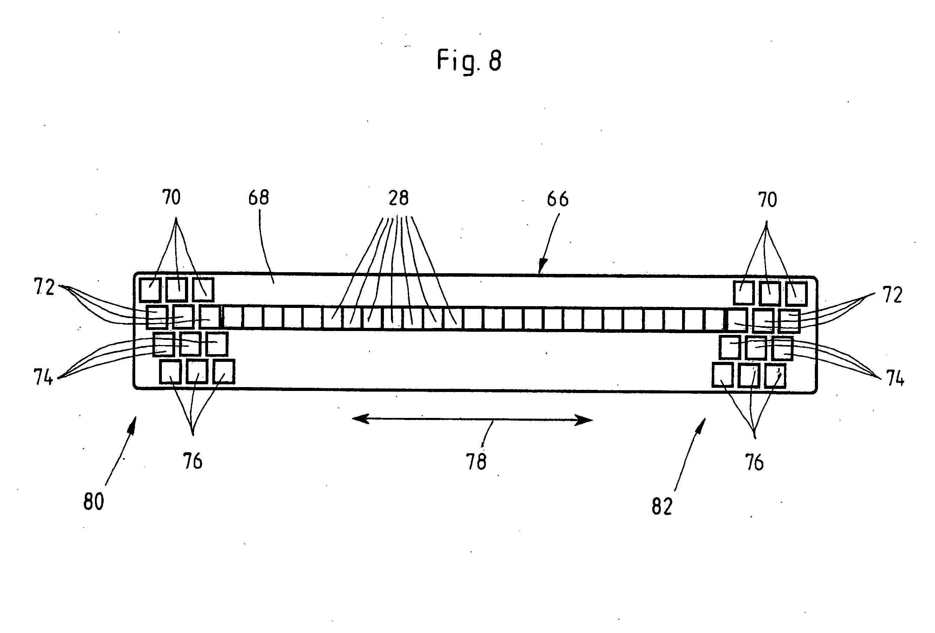

Figur 8 zeigt eine alternative Ausgestaltung für einen Magnetfelddetektor, wie er im Ausführungsbeispiel zu den Figuren 3 und 4 beschrieben ist. Der Magnetfelddetektor ist in dieser Ausgestaltung mit dem Bezugszeichen 66 bezeichnet. Der Magnetfelddetektor 66 weist eine Leiterplatte beziehungsweise gedruckte Schaltung 68 auf, auf der wie bei dem Magnetfelddetektor 54 Hall-Sonden 28 direkt benachbart, das heißt, unmittelbar aneinandergrenzend zueinander in einer Linie in Reihe angeordnet sind. Die Linie ist parallel zu einer Richtung 78 ausgerichtet, die zum Verfahrweg 26 parallel ausgerichtet ist. Der Richtungspfeil 78 zeigt die Hin- und Herbewegung des Kolbens 18 im Zylinder 20 an.

Der Magnetfelddetektor 66 ist derart ausgebildet, dass die Leiterplatte 68 sich über die gesamte Länge des möglichen Hubs des Kolbens 18 im Zylinder 20 erstreckt. Bezüglich des mechanischen Aufbaus der Kolben-Zylinder-Einheit 22 wird im Übrigen auf die vorhergehenden Ausführungen zu den Figuren 1 bis 4 verwiesen.

In den Endbereichen 80, 82 des möglichen Hubs des Kolbens 18 im Zylinder 20 der Kolben-Zylinder-Einheit 22 weist die Leiterplatte 68 Gruppen von Hall-Sonden 70, 72, 74 sowie 76 auf, die jeweils in einer Reihe angeordnet sind. Die Hall-Sonden jeder Gruppe sind benachbart zueinander in Reihen auf einer Linie angeordnet, die parallel zum Richtungspfeil 78 ausgerichtet ist. Die Länge der Reihen von Hall-Sonden 70, 72, 74 sowie 76 ist auf den jeweiligen Endbereich 80, 82 begrenzt und erstreckt sich nicht über die gesamte Länge des möglichen Verfahrwegs 26 des Kolbens 18 im Zylinder 20. Die Hall-Sonden sind in dieser Ausgestaltung nicht nur in Richtung 78 benachbart zueinander angeordnet, sondern in bestimmten Vorzugsbereichen, hier den Endbereichen 80, 82 der Kolbenstellung des Kolbens 18 im Zylinder 20, auch quer dazu. Die Gruppen von Hall-Sonden 70, 72, 74 und 76 sind ferner derart angeordnet, dass sie jeweils benachbart zu einer Gruppe von Hall-Sonden angeordnet sind. In den Gruppen von Hall-Sonden 70, 72, 74 und 76 sind die einzelnen Hall-Sonden 70, 72, 74 und 76 zu direkt benachbarten Hall-Sonden 70, 72, 74 und 76 etwa 1 mm beabstandet angeordnet. Zwischen den Gruppen von Hall-Sonden 70, 72, 74 und 76 in den Endbereichen 80, 82, und hier in Fortsetzung der Gruppe von Hall-Sonden 72, ist die Reihe von Hall-Sonden 28 angeordnet, so dass eine im Wesentlichen durchgehende Linie mit daran in einer Reihe angeordneten Hall-Sonden 28, 72 gebildet ist.

Ferner ist aus Figur 8 ersichtlich, dass die einzelnen Hall-Sonden benachbarter Gruppen gegenüber einander leicht versetzt in Richtung des Richtungspfeils 78 sind. Diese Ausgestaltung erlaubt es, in den Endbereichen 80, 82 des Kolbenhubs eine erhöhte Auflösung zu erreichen. Dies ist unter anderem deshalb aus steuerungstechnischen Gründen von Vorteil, weil das Erreichen der jeweiligen Endstellung vorzeitig erkannt werden kann und die Geschwindigkeit des Kolbens 18 im Zylinder 20 reduziert werden kann, damit der Kolben 18 nicht an stirnseitigen Abschlüssen des Zylinders 20 anschlägt. Darüber hinaus kann eine feinjustierte Endstellung erreicht werden, die je nach Anwendung und Bedarf programmierbar sein kann. Dies ermöglicht es, die Kolben-Zylinder-Einheit 22 für unterschiedlichste Schranken einzusetzen und die Endstellungen sehr fein für die jeweilige Schranke zu justieren. Hierdurch lässt sich die Vielseitigkeit der Kolben-Zylinder-Einheit weiter verbessern.

Bezüglich der weiteren Funktionen und Merkmale wird zu dem vorhergehenden Ausführungsbeispiel verwiesen.

Die zuvor genannten Ausführungsbeispiele dienen lediglich der Erläuterung der Erfindung und sind für diese nicht beschränkend.

### Bezugszeichenliste

- 10: Sensoreinrichtung
- 12: Pfosten
- 14: Baum
- 16: Schranke
- 18: Kolben
- 20: Zylinder
- 22: Kolben-Zylinder-Einheit
- 24: Messeinrichtung
- 26: Verfahrweg
- 28: Hall-Sonden
- 30: Magnet-Widerstandssensor
- 32: Permanentmagnet
- 34: elektrisch leitfähige Bahn
- 36: Widerstandsbahn
- 38: elektrischer Kontakt
- 40: Kolbenstange
- 42: Magnetfeld
- 44: Magnetisch permeable Schicht
- 46: Verschlussdeckel
- 48: Verschlussdeckel
- 50: Führung
- 52: Bereich
- 54: Magnetfelddetektor
- 56: Drehpunkt
- 58: Verbindungsflansch
- 60: Verbindungsflansch
- 62: Zapfen
- 64: Zapfen
- 66: Magnetfelddetektor
- 68: Leiterplatte
- 70: Hall-Sonden
- 72: Hall-Sonden
- 74: Hall-Sonden
- 76: Hall-Sonden
- 78: Richtungspfeil
- 80: Bereich
- 82: Bereich

## Patentansprüche

1. Sensoreinrichtung (10) für die Ermittlung einer Position eines Kolbens (18) gegenüber einem Zylinder (20) einer Kolben-Zylinder-Einheit (22), mit einer Messeinrichtung (24), die einen Magnetfelddetektor (54) sowie einen Magneten (32) aufweist, wobei der Magnetfelddetektor (54) am Zylinder (20) und der Magnet (32) am Kolben (18) angeordnet sind, wobei der Magnetfelddetektor (54) eine Mehrzahl von entlang des Verfahrwegs (26) benachbart zueinander angeordnete Magnetfeldsensoren (28, 70, 72, 74, 76) aufweist,
**dadurch gekennzeichnet,**
**dass** wenigstens in einem Bereich eines Teilabschnitts des Verfahrwegs (26) die Magnetfeldsensoren (70, 72, 74, 76) auch quer zum Verfahrweg (26) angeordnet sind.

2. Sensoreinrichtung nach Anspruch 1, **dadurch gekennzeichnet, dass** der Magnetfelddetektor (54) eine zumindest teilweise entlang des Verfahrwegs (26) angeordnete elektrisch leitfähige Bahn (34) aufweist.

3. Sensoreinrichtung nach Anspruch 1 oder 2, **dadurch gekennzeichnet, dass** der Magnetfelddetektor (54) eine vorzugsweise parallel zur elektrisch leitfähigen Bahn (34) angeordnete Widerstandsbahn (36) aufweist.

4. Sensoreinrichtung nach Anspruch 3, **dadurch gekennzeichnet, dass** die elektrisch leitfähige Bahn (34) und die Widerstandsbahn (36) beabstandet zueinander angeordnet sind.

5. Sensoreinrichtung nach einem der Ansprüche 1 bis 4, **dadurch gekennzeichnet, dass** der Magnetfelddetektor (54) ein magnetisch permeables Bauteil aufweist, welches vorzugsweise einen elektrischen Kontakt aufweist.

6. Sensoreinrichtung nach einem der Ansprüche 2 bis 5, **dadurch gekennzeichnet, dass** die elektrisch leitfähige Bahn (34) und/oder die Widerstandsbahn (36) magnetisch permeabel sind.

7. Sensoreinrichtung nach einem der Ansprüche 1 bis 6, **dadurch gekennzeichnet, dass** die Magnetfeldsensoren (28, 70, 72, 74, 76) in Reihen aufeinanderfolgend angeordnet sind.

8. Sensoreinrichtung nach Anspruch 7, **dadurch gekennzeichnet, dass** die Magnetfeldsensoren (70, 72, 74, 76) benachbarter Reihen versetzt zueinander angeordnet sind.

9. Sensoreinrichtung nach einem der Ansprüche 1 bis 8, **dadurch gekennzeichnet, dass** der Magnetfelddetektor (54, 66) einen magnetischen Rückschluss aufweist.

10. Schranke (16) mit einem an einem Pfosten (12) bewegbar gelagerten Baum (14), welcher Baum (14) mittels einer Kolben-Zylinder-Einheit (22) bewegbar ist, **dadurch gekennzeichnet, dass** die Kolben-Zylinder-Einheit (22) eine Sensoreinrichtung (10) nach einem der vorhergehenden Ansprüche aufweist.

11. Schranke nach Anspruch 10, **dadurch gekennzeichnet, dass** die Magnetfeldsensoren (28), die Widerstandsbahn (36) und/oder die elektrisch leitfähige Bahn (34) einstückig mit dem Kolben (18) und/oder dem Zylinder (20) ausgebildet sind.

12. Schranke nach Anspruch 10 oder 11, **dadurch gekennzeichnet, dass** der Zylinder (20) aus einem im Wesentlichen magnetisch unpermeablen Werkstoff gebildet ist.

## Claims

1. A sensor device (10) for detecting a position of a piston (18) with respect to a cylinder (20) of a piston-cylinder unit, comprising a measuring device (24) which comprises a magnetic field detector (54) as well as a magnet (32), wherein the magnetic field detector (54) is arranged on the cylinder (20) and the magnet (32) is placed on the piston (18), wherein the magnetic field detector (54) comprises a plurality of magnetic field sensors (28, 70, 72, 74, 76) that are placed adjacent to each other along the travel path (26),
**characterized in that**
the magnetic field sensors (70, 72, 74, 76) are also placed transversely with respect to the travel path (26) in at least one area of a section of the travel path (26).

2. A sensor device according to claim 1, **characterized in that** the magnetic field detector (54) comprises an electrically conductive track (34) which is at least partially placed along the travel path (26).

3. A sensor device according to claim 1 or 2, **characterized in that** the magnetic field detector (54) comprises a resistance track (36) which is preferably parallel to the electrically conductive track (34).

4. A sensor device according to claim 3, **characterized in that** the electrically conductive track (34) and the resistance track (36) are spaced from each other.

5. A sensor device according to one of the claims 1 through 4, **characterized in that** the magnetic field detector (54) comprises a magnetically permeable component which preferably comprises an electric contact.

6. A sensor device according to one of the claims 2 through 5, **characterized in that** the electrically conductive track (34) and/or the resistance track (36) are magnetically permeable.

7. A sensor device according to one of the claims 1 through 6, **characterized in that** the magnetic field sensors (28, 70, 72, 74, 76) are disposed successively in rows.

8. A sensor device according to claim 7, **characterized in that** the magnetic field sensors (70, 72, 74, 76) of adjacent rows are offset with respect to each other.

9. A sensor device according to one of the claims 1 through 8, **characterized in that** the magnetic field detector (54, 66) comprises a closing of the magnetic circuit.

10. A barrier (16) having an arm (14) which is arranged on a post (12) in a displaceable manner, which arm (14) can be displaced by means of a piston-cylinder unit (22), **characterized in that** the piston-cylinder unit (22) comprises a sensor device (10) according to one of the preceding claims.

11. A barrier according to claim 10, **characterized in that** the magnetic field sensors (28), the resistance track (36) and/or the electrically conductive track (34) are integrally formed with the piston (18) and/or the cylinder (20).

12. A barrier according to claim 10 or 11, **characterized in that** the cylinder (20) is made of an essentially magnetically impermeable material.

## Revendications

1. Dispositif de détection (10) pour détecter une position d'un piston (18) par rapport à un cylindre (20) d'un ensemble piston-cylindre (22), comprenant un dispositif de mesure (24) qui comprend un détecteur de champ magnétique (54) ainsi qu'un aimant (32), le détecter de champ magnétique (54) étant disposé sur le cylindre (20) et l'aimant (32) étant disposé sur le piston (18), le détecteur de champ magnétique (54) comprenant une pluralité de capteurs de champ magnétique (28, 70, 72, 74, 76) qui sont juxtaposés les uns aux autres le long du trajet de déplacement (26),
**caractérisé en ce que**
les capteurs de champ magnétique (70, 72, 74, 76) sont aussi disposés transversalement au trajet de déplacement (26) dans au moins une partie d'une section du trajet de déplacement (26).

2. Dispositif de détection selon la revendication 1, **caractérisé en ce que** le détecteur de champ magnétique (54) comprend une piste électriquement conductrice (34) qui est au moins partiellement disposée le long du trajet de déplacement (26).

3. Dispositif de détection selon la revendication 1 ou la revendication 2, **caractérisé en ce que** le détecteur de champ magnétique (54) comprend une piste résistante (36) qui est de préférence disposée en parallèle à la piste électriquement conductrice (34).

4. Dispositif de détection selon la revendication 3, **caractérisé en ce que** la piste électriquement conductrice (34) et la piste résistante (36) sont espacées l'une de l'autre.

5. Dispositif de détection selon l'une des revendications 1 à 4, **caractérisé en ce que** le détecteur de champ magnétique (54) comprend un composant magnétiquement perméable qui comprend de préférence un contact électrique.

6. Dispositif de détection selon l'une des revendications 2 à 5, **caractérisé en ce que** la piste électriquement conductrice (34) et/ou la piste résistante (36) sont magnétiquement perméables.

7. Dispositif de détection selon l'une des revendications 1 à 6, **caractérisé en ce que** les capteurs de champ magnétique (28, 70, 72, 74, 76) sont disposés successivement en rangées.

8. Dispositif de détection selon la revendication 7, **caractérisé en ce que** les capteurs de champ magnétique (70, 72, 74, 76) des rangées adjacentes sont disposés décalés les uns par rapport aux autres.

9. Dispositif de détection selon l'une des revendications 1 à 8, **caractérisé en ce que** le détecteur de champ magnétique (54, 66) comprend un circuit magnétique de fermeture.

10. Barrière (16) comprenant une flèche (14) logée de manière mobile sur un poteau (12), laquelle flèche (14) est déplaçable par moyen d'un ensemble piston-cylindre (22), **caractérisée en ce que** l'ensemble piston-cylindre (22) comprend un dispositif de détection (10) selon l'une des revendications précédentes.

11. Barrière selon la revendication 10, **caractérisée en ce que** les capteurs de champ magnétique (28), la piste résistante (36) et/ou la piste électriquement conductrice (34) sont solidaires du piston (18) et/ou du cylindre (20).

12. Barrière selon la revendication 10 ou la revendication 11, **caractérisée en ce que** le cylindre (20) est formé en un matériau essentiellement magnétiquement imperméable.
